# EUROPEAN PATENT SPECIFICATION

(11) **EP 1 793 389 B1**
(45) Date of publication and mention of the grant of the patent: **25.11.2009**
(21) Application number: 05765216.6
(22) Date of filing: 04.07.2005
(51) Int. Cl.: H01B 1/06, C08F 222/40, H01M 8/02, H01M 8/10

(54) **PROTON CONDUCTOR**
PROTONENLEITER
CONDUCTEUR DE PROTONS

(30) Priority: 26.08.2004 JP 2004246557
(43) Date of publication of application: 06.06.2007
(73) Proprietor: National University Corporation Yokohama National University, Kanagawa 240-8501 (JP)
(72) Inventor: OYAMA, Toshiyuki, Yokohama-shi, Kanagawa 2408501 (JP); TOMOI, Masao, Yokohama-shi, Kanagawa 2408501 (JP)
(74) Representative: Wilson Gunn
(86) International application number: PCT/JP2005/012311
(87) International publication number: WO 2006/022081

(56) References cited:
- WO-A-03/083981
- JP-A- 4 036 901
- JP-A- 4 073 803
- JP-A- 4 184 811
- JP-A- 2000 149 660
- JP-A- 2002 270 236
- JP-A- 2003 086 250
- JP-A- 2004 047 183
- JP-A- 2004 146 279
- US-A1- 2002 055 045
- NODA, WATANABE: "Highly conductive polymer electrolytes prepared by in situ polymerization of vinyl monomers in room temperature molten salts" ELECTROCHIMICA ACTA, vol. 45, 2000, pages 1265-1270, XP002495964

## Description

### Field of the Invention:

The present invention relates to a proton conductive electrolyte material and more particularly, relates to a proton conductive electrolyte material that is applicable to a electrolyte of a fuel cell and the like.

### Prior Art:

Research and development of polymer electrolyte fuel cell (PEFC) has been actively carried out as an electric power supply for electric cars and for small size cogeneration system. Generally, ion-exchange membranes belonging to perfluorosufonic acids are used for said PEFC electrolyte membranes, and proton conductivity and the function to separate fuel gas from oxidant gas required for electrolytes are expressed in their fully hydrated state.
However, since overloaded hydration in gas diffusion electrode used for PEFC hampers electrode reaction based on flooding, humidity control in feed stream is an important technique. Furthermore, to perform humidity control properly during normal pressure operation, operation temperature more than 80°C is hard to conduct. Therefore, effective utilization of PEFC is difficult, since the operation temperature is closed to ambient temperature and the cooling system becomes complicated and waste-heat temperature is low.

Sulfonated engineering plastic with high heat resistance has been examined as a high temperature electrolyte membranes. However, most of them cannot be used at dried high temperature, since they express proton conductivity in a hydrated state. Moreover, hydrocarbon electrolyte membranes with sufficient reliability have not been developed because of oxidative degradation of the area closed to cathode.
To resolve the above problems, proton conductive ionic liquid composed of base compounds such as imidazoles has been developed (Reference 1, Reference 2). Since said type of ionic liquid does not require water for proton conduction, it can be used in non-humidifying condition (dried state) at more than 100°C. Therefore, it is a possible material for electrolyte membranes for fuel cells with high power supply. Furthermore, to stabilize ionic liquid, a method of fixing by polymerization of vinyl monomers in the ionic liquid has been proposed (Reference 3).

Reference 1: WO03/083981
Reference 2: Chem. Comm. 2003, 938-939.
Reference 3 Electrochimica Acta 45 (2000) 1265-1270.

### Problems to be solved by the Invention:

In the case of fixing an ionic liquid in a polymer (Reference 3), there has been a problem that an ionic liquid leaks out and evaporates during the use as an electrolyte membrane in case that an ionic liquid is not well compatible with a polymer.
Therefore, the purpose of the present invention is to provide a heat resistant, oxidation resistant and acid resistant compatibilized material which comprises a polymer and a proton conductive ionic liquid and these are compatiblized, which is attained by selecting a polymer suitable to be compatible with the proton conductive ionic liquid.

### Means to solve the Problems:

The present inventors discovered that a polymer having a maleimido structure is highly compatible with a salt such as ionic liquid, wherein said salt comprises Brönsted base and Brönsted acid and has at least one heteroatom carrying protons, and then that the compatibilized material made of said salt and said polymer is highly heat resistant, acid resistant and ionic conductive.
Therefore, the present invention is a proton conductor consisting of a compatibilized material made of a salt of Brönsted base and Brönsted acid, wherein said salt has at least one heteroatom accompanied with protons, and a polymer, wherein said polymer is produced by copolymerizing a vinyl compound, a divinyl compound and a maleimide compound and said maleimide compound is represented by the chemical formula 1 below: 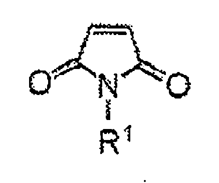 wherein R¹ is a hydrogen atom, an alkyl group which may contain a substituent, an aryl group or an aralkyl group.

### Effects of the Invention

The proton conductor of the present invention has a least leak out of an ionic liquid and has flexibility in forming any shape of membrane. Furthermore, when the proton conductor of the present invention is used for an electrolyte membrane of a polymer electrolyte fuel cell, the cell is possible to operate at more than 100°C and to provide a high power fuel cell, since the cell can operate in non-humidifying condition.

### Brief Description of the Drawings

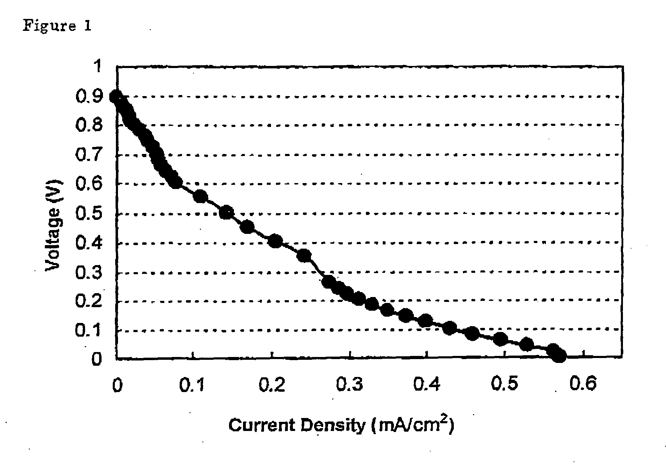

[0029] Fig. 1 shows the result of electric power generation test.

### Detailed Description of the Invention:

The salt composing the proton conductor of the present invention comprises Brönsted base and Brönsted acid. The salt is also referred to as Brönsted acid-basic ionic liquid or proton conductive ionic liquid. Furthermore, the salt has at least one heteroatom carrying protons. A heteroatom with protons may belong to either Brönsted base or Brönsted acid, preferably to Brönsted base. The heteroatom includes N atom, P atom, S atom, O atom and the like, preferably N atom. The salt is preferably an onium salt.

The Brönsted base with a heteroatom is preferably primary to tertiary amines. Additionally, a hydrogen atom involved in primary and secondary amines is not a proton mentioned here. The proton source could be Brönsted acid constituting salt or such protonic acid as not involved in salt formation. However, the proton source is preferably Brönsted acid involved in salt formation. Generally, mobile proton could be obtained easily by reacting primary to tertiary amine with Brönsted acid, i.e. proton source, to result in a salt (ammonium salt). Additionally, hydrogen atom contained in an amine functions as the proton as above described, wherein the amine accompanies such strong electron-attractive group as (bis(trifluoromethansulfonyl)imido((CF₃SO₂)₂NH).

Brönsted base involves, for example, straight chain Brönsted bases such as butyl amine, triethyl amine, dibutyl amine, tributyl phosphine, triphenyl phosphine, dimethyl sulfide, diphenyl sulfide, methylphenyl sulfide, hydrazine, diphenyl amine and triphenyl amine; cyclic Brönsted bases such as acridine, benzothiazole, benzimidazole, 1,2,3-benzotriazole, carbazole, cinnoline, 1,10-phenanthroline, phenothiazine, quinoline, isoquinoline, purine, indole, thionaphthalene, s-triazine, s-trithian, pyrimidine, 1,3,4-thiodiazole, pyridine, imidazole, pyrazole, 1,2,3-triazole, 1,2,4-triazole, 1,2,3-oxadiazole, oxazole, thiazole, pyrazine, pyridazine, pyperidine, 2-pyrazoline, pyrazolidine, 3-pyroline, pyrrolidine, 1,3-dioxolane, pyrole, morpholine, quinoxaline, 4,4-trimethylenedipyridine, pyperazine, 4,4'-trymethylenedipyperidine, 1-(3-aminopropyl)-imidazole, 1,3,5-triazole, steroid cyclic compound, thiophene, dibenzofuran, flavone, coumalin, benzofran, 4H-pyrane, fran, dioxane, and their derivatives. The derivatives contain substituents by alkyl group, alkenyl (or vinyl) group, aryl group, halogen, alkoxy group, cyano group, amide group, amido group, nitro group, ketone group.

Among these Brönsted bases, pyrolidine, pyridine, piperidine, triethylamine, imidazole, pyrazole, pyrazine, 1,2,4-triazole, butylamine, dibutylamine, dephenylamine, benzimidazole, morpholine, quinoxaline, 4,4-trimethylenedipyridine are preferable in the light of heat stability and hydrophobicity, and pyrolidine, pyridine, pyperidine, triethylamine, imidazole, pyrazole, pyrazine, benzimidazole and 1,2,4-triazole are more preferable.
More than two kinds of these Brönsted bases could be used if necessary. Furthermore, these Brönsted bases could be fixed on other polymer (i.e. a polymer other than the polymer described later) by covalent bonding and the like.

Brönsted acid involves, for example, trifluoromethanesulfonic acid (triflic acid), bis(fluorosulfonyl)imide, bis(trifluoromethanesulfonyl)imide, bis(trifluoromethanesulfonyl)methane, tris(trifluoromethanesulfonyl)methane, tetrafluoroboric acid, hexafluoro phosphoric acid and tris(fluorosulfonyl)methane, sulfuric acid, hydrochloric acid, nitrous acid, phosphoric acid, acetic acid and derivatives of these compounds. Among them, bis(fluorosulfonyl)imide and bis(trifluoromethanesulfonyl)imide are preferable.
Moreover, these Brönsted acids could be fixed on other polymer (i.e., a polymer other than the polymer described later) by covalent bonding and the like.
In those salts formed by above bases and acids, the mole ratio of Brönsted acid to Brönsted base is preferably 0.9-1.1, more preferably 0.95~1.05.

On the other hand, a polymer with maleimide structure is formed by copolymerization of monomers such as a maleimide compound, a vinyl compound and a divinyl compound and the maleimide compound is shown by the following formula 1: 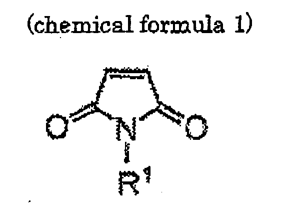 In the formula, R¹ is an alkyl group that may contain a substituent, an aryl group or an aralkyl group, and preferably an aryl group. The carbon number of the alkyl group is preferably 1 to 4. As an aryl group, phenyl and naphthyl are prefered. As an aralkyl group, prefered is one selected from a group comprising alkyl and aryl. Substituents involved are alkyl, aryl, halogen atom, cyano, nitro, alkoxyl, ketone and the like.

The vinyl compound has not limited, but is preferably (a) a vinyl compound represented by CH₂=CR²R³ (in the formula, R² is the same as R¹, R³ is a hydrogen atom, an alkyl group with 1 to 4 carbon atoms, preferably a hydrogen atom or a methyl, more preferably a hydrogen atom), (b) a vinyl compound belonging to acryl amides or methacrylamides represented by CH₂=CR⁴CONR⁵R⁶ (in the formula, R⁵ and R⁶ are independently the same as R¹, R⁴ is the same as R³), and (c) an acrylonitril and a vinyl halogenide represented by CH₂=CR⁷R⁸ (in the formula, R⁷ is CN or a halogen atom and R⁸ is the same as R³, The halogen atom is preferably chlorine atom). Among the above compounds, a vinyl compound represented by CH₂=CR²R⁸ (in the formula, R² and R³ are the same as those in the above formula) is preferably used. Incidentally, acrylic ester, methacrylic ester and vinyl acetate are not appropriate as vinyl compounds because of their low acid resistance.

The divinyl compounds have no restraint and involve, for example, divinyl compounds represented by CH₃=CH-R⁹-CH=CH₂, divinyl compounds with similar structure to the divinyl compounds, compounds composed of two maleimide compounds of the chemical formula 1 cross-linked via R¹ and cross-linking agents such as methylenebisacrylamide ((CH₂=CHCONH)₂CH₂) and the like, but divinyl compounds represented by CH₂=CH-R⁹-CH=CH₂ are preferable. R⁹ is alkylene optionally containing a substituent, or arylene, preferably arylene. Arylene goup is preferably phenylene, more preferably p-phenylene. The carbon number of alkylene group is preferably 2 to 8. Substituents involve alkyl, aryl, halogen atom, cyano, nitro, alkoxy, ketone and other groups. Vinyl ether is not appropriate as divinyl compound because of the possibility of supervention of homopolymerization.

Preferred mole ratio (feed amount) of vinyl compound plus divinyl compound to maleimide compound is 40 to 60 mole% centering on 50 mole%. The use of stylene as vinyl compound and divinyl benzene as divinyl compound results in 50 mole% as polymer yield, even when feed amount deviates from 50 mole%. Furthermore, mole ratio (feed amount) of divinyl compound to vinyl compound is preferably 1 to 20 mol %, more preferably 2 to 10 mole%.

The following monomers are exemplified as monomers constituting the polymer. (chemical formula 2)

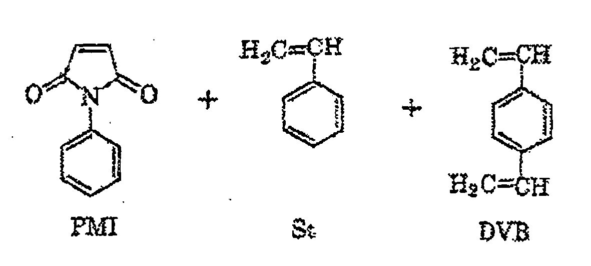

Moreover, the following polymer is exemplified as a polymer. 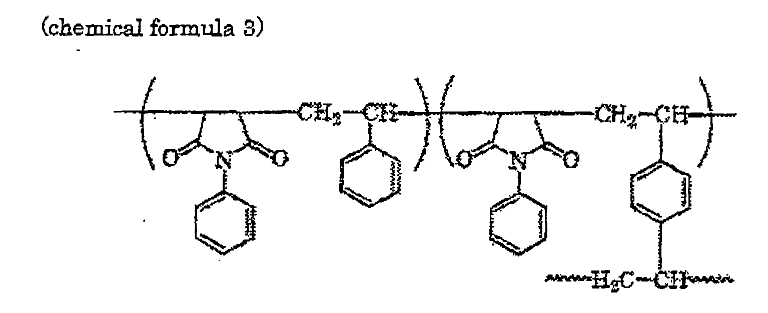 Additionally, the above formula represents the repeating unit, but not quantitative relation.

The procedure of compatibilized material of the present invention comprises mixing the salt and monomers constituting the polymer, polymerizing them and causing the salt and polymer compatible. The compatibility of mixed product of the salt and polymer could be confirmed by measuring dynamic viscoelasticity and by qualitatively examining the transparency of the compatibilized material. In dynamic viscoelasticity measurement, the compatibilized material made of polymer and ionic liquid is confirmed by no peak near glass transition temperature (220°C) of the polymer and by presence of a big peak at a lower temperature (e.g., near at 79°C for the salt of imidazole and bis(trifuloromethane sulfonyl)imide used as ionic liquid).

The procedure is preferably solubilizing the salt and monomers constituting the polymer in solvent and causing them copolymerization. The solvent is preferably acetone, methylethylketone and the like.
The concentration of salt in solvent is preferably 3 to 4 M and that of total monomers is 5 to 7 M. Also, azobisisobutylonitril (AIBN), benzoyl peroxide (BPO) and the like can be used as a reaction initiator. The concentration is preferably 0.5 to 2 mol% against total monomers. Reaction temperature is generally 60 to 100°C and the reaction time is generally 6 to 12 hrs.
The weight ratio of the salt (proton conductive ionic liquid) to polymer is preferably 1 to 3, most preferably 1.1 to 1.3. Increasing the ratio of the ionic liquid raises the conductivity itself, but inclines to decrease the strength of the compatibilized material with polymer.

The proton conductor of the present invention can be applied to an electrolyte membrane of a polymer electrolyte fuel cell. The polymer electrolyte fuel cell has the fundamental structure with two electrodes (cathode and anode) pinching electrolyte membrane optionally superimposing several the fundamental structures. A platinum-supported carbon electrode is used as an electrode. Hydrogen gas is used as fuel, and oxygen gas and air is used as oxidant. General electric power generation is about I to 250 kW.

Following Examples are presented to further illustrate the present invention.

### Synthetic Example 1

In this Example, proton conductive ionic liquid Im/HTFSI and BI/HTFSI were synthesized. Imidazole (Im, Wako Pure Chemical Industries, Ltd.) was used after r.t./15h reduced-pressure drying. Benzimidazole was used after r.t./15h reduced-pressure drying. Bis (trifruolomethansulfonyl)imido (HTFSI, Morita Chemical Industries Co., Ltd.) was used without change. Im or BI, and HTFSI were weighed in a glove bag under argon atmosphere at (Im or BI)/HTFSI = 5/5 (Mole ratio), were mixed, were melted completely by heating, were homogeneously stirred and were resulted in white solid. The structure was confirmed by ¹H-NMR. Tₘ and T_{donset} were measured by DSC and TGA, respectively.

### Example 1

N-phenylmaleimide (PMI), stylene (St) and divinyl benzene (DVB)(2~10 mole% to stylene) were charged at equivalence ratio of {PMI : (St + DVB) }=1.1. Then the charge stock was added with proton conductive ionic liquid (total monomers:ionic liquid = 2:1~2:2 (mole ratio)) obtained in Synthetic Example 1, and with acetone (total monomers/acetone = 6-6/1 (mol/L), and moreover added with 2,2'-azobis (isobutylonitril) (AIBN) as radical polymerization initiator at 1 mole% to total monomers, inpoured into a mould, and polymerized at 60°C for 12 hr. After the reaction, the product was dried at room temperature for 3 hr under reduced pressure and was dried at 100°C for 12 hr under reduced pressure to remove acetone completely, and resulted in gelling composite membrane.
The characteristic evaluation of the composite membrane was performed in the following way. T_{donset} was measured by thermo-gravimetric analysis (TGA, under nitrogen atmosphere, rate of temperature increase was 10°C/min) to evaluate heat resistance. Furthermore, the composite membrane was immersed in ion-exchanged water and Fenton reagent (30 ppm FeSO₄/30% hydrogen peroxide), was subjected to shaking test at 25°C for 24hr and was evaluated on water and oxidation resistance of the composite membrane by rate of weight change of the membrane before and after the test. Still furthermore, ionic conductance (σ) of the composite membrane was measured by alternating current impedance method under non-humidifying condition (dried state), at electric pressure 10 mV at frequency range 5 Hz~13 Hz by the use of Impedance Analyzer (Hewlett-Packard 4192ALF). The obtained test results are shown in Table 1.

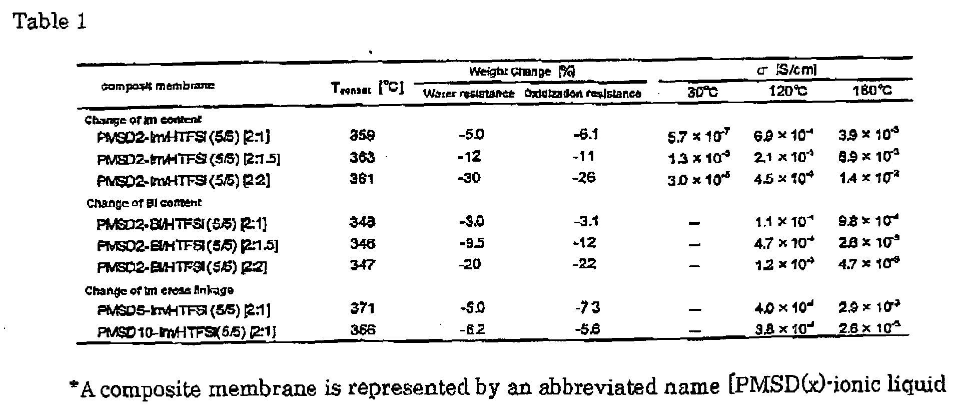

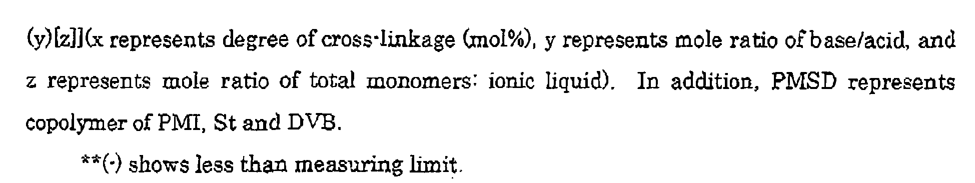

All synthesized composite membranes were hard membranes at room temperature but were changed into flexible membranes by heating to about 100°C. Only such composite membrane synthesized at mole ratio 2.2 of BI/HTFSI (5/5) or Im/HTFSI (5/5) to monomers was translucent at room temperature and was changed to clear and colorless by heating. Furthermore, leakage of ionic liquid was not observed even when pressure was applied to ion gelling membrane. The composite membranes are very heat resistant, since their T_{donset} is more than 350°C. Since there are not great differences in water resistance and oxidation resistance for all of the synthesized composite membranes, hydrophobic gelling polymer matrix clearly contributes to the high oxidation resistance. Also, all the tested composite membrane showed high ionic conductance (>10⁻³S/cm at 180°C) under no humidity in intermediate-temperature range of more than 100°C.

### Example 2

A membrane- electrode assembly (MEA) was constructed by the use of the composite membrane PMSD2-Im/HTFSI(5/5)[2:1] prepared in Example 1 and electric power generation test was performed. Firstly, a carbon paper, i.e a base plate of electrode, was treated with water repellency. 15wt%PTFE solution was prepared, dipped with the carbon paper. Then, drying at 80°C for 30 min and sintering at 390°C for 60 min coated the carbon paper with PTFE as a treatment with water repellency. The amount of coated PTFE was 22wt% to carbon paper.
Secondly, an electrode was prepared by coating a carbon paper with platinum-carrying carbon (Pt/C), i.e. catalytic agent. 0.40 g Pt/C (Pt:C=1:1) was added with 2.0 g ethylene glycol dimethyl ether and 0.20 g Im /HTFSI (5/5) and the mixture was sonicated for 10 min. Catalytic paste was prepared by adding 1.0 g of 20wt% solution of PMS/THF to the mixture so as to adjust PMS to 0.20 g, sonicating further 30 min and by stirring for 1 min in a mixer. Hear, PMS represents copolymer between PMI and St.

The electrode was obtained by coating 5-0 cm square water repellent-carbon paper with prepared paste as homogeneously as possible and by drying under nitrogen gas stream at 80°C/30 min + 140°C/1h. The amount of Pt in the electrode was 1.24 mg/cm².
MEA was prepared by connecting by the use of hot pressing the electrode with the electrolyte membrane PMSD2-Im/HTFSI(5/5)[2:1] prepared in Example 1.
Electric power generation test was performed by the use of prepared MEA under non-humidifying condition (dried state) at 130°C. The result of the electric power generation test is shown in Fig. 1. Proton conductivity was conformed since the open-circuit voltage (OCV) was 0.893V and maximum output density was 0.085m W/cm² at 0.24mA/cm².

The proton conductor of the present invention is applied not only to electrode of polymer electrolyte fuel cells, but also to a barrier membrane for hydrogen sensor, electrochromic-display materials, electrolysis cells for hydrogen generation, proton conducting membranes for chemical reactor, electrolyte membranes for proton mobile secondary battery, biological membrane-mimic hydrogen mobile membranes and the like.

## Claims

1. A proton conductor consisting of a compatibilized material made of a salt of Brönsted base and Brönsted acid, wherein said salt has at least one heteroatom accompanied with protons, and a polymer, wherein said polymer is produced by copolymerizing a vinyl compound, a divinyl compound and a maleimide compound and said maleimide compound is represented by the chemical formula 1 below: 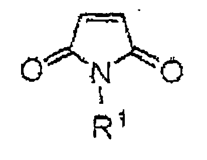 wherein R¹ is a hydrogen atom, an alkyl group which may contain a substituent, an aryl group or an aralkyl group.

2. The proton conductor of claim 1, wherein said vinyl compound is (a) a vinyl compound represented by CH₂=CR²R³, wherein R² is the same group as R¹ and R³ is a hydrogen atom or an alkyl group having 1 to 4 carbon atoms, (b) a vinyl compound belonging to acryl amides or methacrylamides represented by CH₂=CR⁴CONR⁵R⁶, wherein R⁵ and R⁶ are independently the same group as R¹ and R⁴ is the same group as R³, or (c) an acrylonitril or a vinyl halogenide represented by CH₂=CR⁷R⁸, wherein R⁷ is CN or a halogen atom and R⁸ is the same group as R³, and said divinyl compound is represented by CH₂=CH-R⁹-CH=CH₂, wherein R⁹ is an alkylene group or an arylene group, which may contain a substituent.

3. The proton conductor of claim 1 or 2, which is produced by the steps of dissolving said salt and the monomers constituting said polymer in a solvent and then copolymerizing these.

4. A polymer electrolyte fuel cell comprising the proton conductor of any one of claims 1 to 3 as an electrolyte.

## Patentansprüche

1. Protonenleiter bestehend aus einem kompatibilisierten Material, das hergestellt ist aus einem Salz einer Brönsted-Base und einer Brönsted-Säure, wobei das Salz wenigstens ein von Protonen begleitetes Heteroatom aufweist, und einem Polymer, wobei das Polymer durch Copolymerisieren einer Vinylverbindung, einer Divinylverbindung und einer Maleimidverbindung hergestellt ist und die Maleimidverbindung durch die nachstehende chemische Formel 1 wiedergegeben ist: 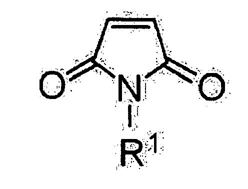 worin R¹ ein Wasserstoffatom, eine Alkylgruppe, welche einen Substituenten enthalten kann, eine Arylgruppe oder eine Aralkylgruppe ist.

2. Protonenleiter nach Anspruch 1, wobei die Vinylverbindung (a) eine Vinylverbindung, die durch CH₂=CR²R³ wiedergegeben ist, wobei R² die gleiche Gruppe wie R¹ ist und R³ ein Wasserstoffatom oder eine Alkylgruppe mit 1 bis 4 Kohlenstoffatomen ist, (b) eine Vinylverbindung, die zu Acrylamiden oder Methacrylamiden gehört, die durch CH₂=CR⁴ CONR⁵R⁶wiedergegeben ist, wobei R⁵ und R⁶ unabhängig voneinander die gleiche Gruppe wie R¹ sind und R⁴ die gleiche Gruppe wie R³ ist, oder (c) ein Acrylnitril oder ein Vinylhalogenid ist, das durch CH₂=CR⁷R⁸ wiedergegeben ist, wobei R⁷ CN oder ein Halogenatom ist und R⁸ die gleiche Gruppe wie R³ ist, und die Divinylverbindung durch CH₂=CH-R⁹-CH=CH₂ wiedergegeben ist, wobei R⁹ eine Alkylengruppe oder eine Arylengruppe ist, welche einen Substituenten enthalten kann.

3. Protonenleiter nach Anspruch 1 oder 2, welcher durch die Schritte des Auflösens des Salzes und der Monomere, welche das Polymer bilden, in einem Lösemittel und anschließend des Copolymerisierens dieser hergestellt ist.

4. Polymerelektrolytbrennstoffzelle umfassend den Protonenleiter nach einem der Ansprüche 1 bis 3 als einen Elektrolyt.

## Revendications

1. Conducteur de protons consistant en une matière compatibilisée faite d'un sel de base de Brönsted et d'un acide de Brönsted, dans lequel ledit sel a au moins un hétéroatome accompagné de protons, et un polymère, dans lequel ledit polymère est produit par copolymérisation d'un composé vinylique, d'un composé divinylique et d'un composé maléimide, ledit composé maléimide étant représenté par la formule chimique 1 ci-dessous : 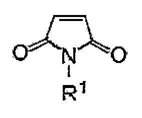 dans laquelle R¹ est un atome d'hydrogène, un groupe alkyle qui peut contenir un substituant, un groupe aryle ou un groupe aralkyle.

2. Conducteur de protons selon la revendication 1, dans lequel ledit composé vinylique est (a) un composé vinylique représenté par CH₂=CR²R³, dans lequel R² est le même groupe que R¹ et R³ est un atome d'hydrogène ou un groupe alkyle ayant de 1 à 4 atomes de carbone, (b) un composé vinyle appartenant aux amides acryliques ou méthacrylamides représentés par CH₂=CR⁴CONR⁵R⁶, dans lesquels R⁵ et R⁶ sont indépendamment le même groupe que R¹ et R⁴ est le même groupe que R³, ou (c) un acrylonitrile ou un halogénure de vinyle représenté par CH₂=CR⁷R⁸, dans lequel R⁷ est CN ou un atome d'halogène et R⁸ est le même groupe que R³, et ledit composé divinylique est représenté par CH₂=CH·R⁹·CH=CH₂, dans lequel R⁹ est un groupe alkylène ou un groupe arylène, qui peut contenir un substituant.

3. Conducteur de protons selon la revendication 1 ou 2, lequel est produit par les étapes de dissolution dudit sel et des monomères constituant ledit polymère et ensuite de copolymérisation de ceux-ci.

4. Pile à combustible à electrolyte polymère comprenant le conducteur de protons de l'une quelconque des revendications 1 à 3 en tant qu'électrolyte.
